# EUROPÄISCHE PATENTSCHRIFT

(11) **EP 1 161 829 B1**
(45) Veröffentlichungstag und Bekanntmachung des Hinweises auf die Patenterteilung: **30.10.2002**
(21) Anmeldenummer: 00907433.7
(22) Anmeldetag: 15.01.2000
(51) Int. Cl.: H04N 5/14, H04N 5/232

(54) **VERFAHREN UND VORRICHTUNG ZUR BESTIMMUNG EINER VERSCHIEBUNG VON BILDERN EINER BILDSEQUENZ**
METHOD AND DEVICE FOR DETERMINING A DISPLACEMENT OF IMAGES IN AN IMAGE SEQUENCE
PROCEDE ET DISPOSITIF POUR DETERMINER UN DECALAGE D'IMAGES D'UNE SEQUENCE D'IMAGES

(30) Priorität: 05.03.1999 DE 19909627
(43) Veröffentlichungstag der Anmeldung: 12.12.2001
(73) Patentinhaber: ROBERT BOSCH GMBH, 70442 Stuttgart (DE)
(72) Erfinder: ENGELSBERG, Andreas, D-31141 Hildesheim (DE)
(86) Internationale Anmeldenummer: DE0000134
(87) Internationale Veröffentlichungsnummer: WO00054494

(56) Entgegenhaltungen:
- EP-A- 0 332 169
- EP-A- 0 496 635
- EP-A- 0 762 774
- US-A- 5 648 815
- JANG S -I ET AL: "A REAL-TIME IDENTIFICATION METHOD ON MOTION AND OUT-OF-FOCUS BLUR FOR A VIDEO CAMERA" IEEE TRANSACTIONS ON CONSUMER ELECTRONICS,US,IEEE INC. NEW YORK, Bd. 40, Nr. 2, 1. Mai 1994 (1994-05-01), Seiten 145-152, XP000459692 ISSN: 0098-3063
- KENYA UOMORI ET AL: "AUTOMATIC IMAGE STABILIZING SYSTEM BY FULL-DIGITAL SIGNAL PROCESSING" IEEE TRANSACTIONS ON CONSUMER ELECTRONICS,US,IEEE INC. NEW YORK, Bd. 36, Nr. 3, 1. August 1990 (1990-08-01), Seiten 510-519, XP000162883 ISSN: 0098-3063

## Beschreibung

### Stand der Technik

Die Erfindung geht aus von einem Verfahren zur Bestimmung der Verschiebung von Bildern einer Bildsequenz nach der Gattung des Hauptanspruchs und von einer Vorrichtung zur Bestimmung der Verschiebung von Bildern einer Bildsequenz nach der Gattung des nebengeordneten Anspruchs 13. Aus dem Artikel H. Rindtorff: "Bildstabilisation in Consumer-Camcordern, Funktion und Wirkungsweise", Fernseh- und Kinotechnik, 49. Jahrgang, Nr.1 / 2 1995 ist ein Bildstabilisierungssystem bekannt, das ein Bild bei Aufnahmen aus der Hand weitgehend ruhigstellen soll. Das Bild wird dabei in vier Sektoren aufgeteilt, in denen Bewegungsvektoren, die die Verschiebung des Bildes beschreiben, bestimmt werden. Aus den Bewegungsvektoren der einzelnen Sektoren wird ein gesamter Bewegungsvektor bestimmt, der die Auslenkung der Kamera idealerweise repräsentiert.

Aus US-A-5 648 815 ist ein Verfahren bekannt, bei dem ein Bild in mehrere Detektionsfelder aufgeteilt wird. Bei Erfüllung bestimmter vorbestimmter Bedingungen wird ein Detektionsfeld gültig, und zur Ermittlung der Verschiebung herangezogen. Ein weiteres Verfahren ist aus EP-A-0 332 169 bekannt. EP-A-0 762 774 zeigt ein Verfahren, bei welchem für mehrere Macro blocks eines Bildes jeweils ein Bewegungsvektor gebildet wird, welche dann zur Erzeugung eines Gesamtvektors dienen.

### Vorteile der Erfindung

Das erfindungsgemäße Verfahren mit den Merkmalen des Hauptanspruchs hat demgegenüber den Vorteil, daß Bildbereiche besonders in den Anteilen eines Bildes zur Bestimmung der Verschiebung der Bilder herangezogen.werden, die durch eine möglichst große Wahrscheinlichkeit, daß die Bildbewegung ohne die Zusatzbewegung auftritt, ausgezeichnet sind. Hierdurch wird die Bestimmung der Verschiebung von Bildern einer Bildsequenz besonders zuverlässig durchgeführt. Weiterhin ist es für die sichere Bestimmung der Verschiebung von Bildern einer Bildsequenz zuträglich, daß die Position und die Abmessungen der Bildbereiche fest vorgegeben werden. Dadurch wird insbesondere für ein spezielles Szenario der Bewegbild-Kommunikation mit relativ geringem Verarbeitungsaufwand eine zuverlässige Bestimmung der Verschiebung vorgenommen. Ein erster Bildbereich, der aus der Mehrzahl der Bildbereiche bevorzugt zur Bestimmung der Verschiebung herangezogen wird, wird durch die Wahl seiner Position und seiner Abmessungen innerhalb der Bilder beispielsweise allein zur Bestimmung der Verschiebung herangezogen, so daß andere Bildbereiche nicht berücksichtigt werden müssen, was den Verarbeitungsaufwand zur Bestimmung der Verschiebung von Bildern verringert.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist, daß ein erstes Bild der Bildsequenz korrigiert wird, indem die Verschiebung entweder aus Bilddaten des ersten Bildes und aus Bilddaten eines zweiten, vorzugsweise dem ersten Bild unmittelbar vorangehenden, Bildes der Bildsequenz oder aus Bilddaten des ersten Bildes und aus Bilddaten eines zweiten, vorzugsweise dem ersten Bild unmittelbar vorangehenden Eingangsbildes der Bildsequenz bestimmt wird, wobei als Verschiebung eine Bereichsverschiebung eines Bildbereichs herangezogen wird, wobei die Bereichsverschiebung eines Bildbereichs der Mehrzahl der Bildbereiche entweder aus den Bilddaten des ersten Bildes und des zweiten Bildes innerhalb des einen Bildbereichs oder aus den Bilddaten des ersten Bildes und des zweiten Eingangsbildes innerhalb des einen Bildbereichs bestimmt wird. Dadurch werden zur Bestimmung der Verschiebung eines Bildes lediglich die Bilddaten des ersten und des zweiten Bildes innerhalb des Bildbereichs, der für die Bestimmung der Verschiebung des Bildes herangezogen wird, zur Verarbeitung benötigt, wodurch sich eine Verringerung des Verarbeitungsaufwandes ergibt.

Weiterhin ist von Vorteil, daß die Position und die Abmessungen des wenigstens einen ersten Bildbereichs so gewählt werden, daß der wenigstens eine erste Bildbereich der zu korrigierenden Bilder überwiegend vom Bildhintergrund ausgefüllt wird. Da der Bildhintergrund in der Regel von einem Bild zu einem anderen Bild, zwischen denen die Verschiebung festgestellt werden soll, kaum Zusatzbewegungen aufweist, die der Bildbewegung, die insbesondere durch die unabsichtliche Bewegung einer Kamera hervorgerufen wird, überlagert wird, kann ein erster Bildbereich, der zu korrigierenden Bilder vorteilhaft zur Bestimmung der Verschiebung herangezogen werden, wenn er vom Bildhintergrund ausgefüllt wird.

Weiterhin ist es von Vorteil, daß die Position und die Abmessungen wenigstens eines zweiten Bildbereichs so gewählt werden, daß der wenigstens eine zweite Bildbereich der zu korrigierenden Bilder überwiegend vom Bildvordergrund ausgefüllt wird. Dadurch wird die Bestimmung einer Verschiebung von Bildern einer Bildsequenz besonders dann einfach und mit hoher Genauigkeit möglich, wenn beispielsweise der Bildhintergrund einer starken Zusatzbewegung ausgesetzt ist, die der Bildbewegung, die die beispielsweise durch die unbeabsichtigte Kamerabewegung hervorgerufen wird, überlagert ist.

Weiterhin ist es von Vorteil, daß der wenigstens eine erste und/oder der wenigstens eine zweite Bildbereich zur Bestimmung der Verschiebung in Abhängigkeit einer Sicherheit für die Bestimmung der Bereichsverschiebung herangezogen wird. Dadurch kann die Bestimmung der Bereichsverschiebung überprüft werden, weil ein Maß für die Sicherheit der Bestimmung der Bereichsverschiebung innerhalb des Verfahrens zugänglich ist. Die Bestimmung einer Sicherheit für die Bestimmung der Bereichsverschiebung dient somit vor allem einer einfachen und zuverlässigen Trennung der Bildbewegung von der ihr überlagerten Zusatzbewegung.

Weiterhin ist es von Vorteil, daß zwei erste Bildbereiche und ein einzelner zweiter Bildbereich zur Bildkorrektur zur Verfügung stehen, wobei die Bestimmung der Verschiebung auf eine der folgenden drei Arten mit absteigender Priorität durchgeführt wird:
- aus dem Mittelwert der Bereichsverschiebungen der zwei ersten Bildbereiche, wenn die Sicherheit der Bestimmung der Bereichsverschiebungen der beiden ersten Bilderreihe als hinreichend betrachtet wird,
- aus der Bereichsverschiebung desjenigen der zwei ersten Bildbereiche, bei dem die Sicherheit der Bestimmung der Bereichsverschiebung als hinreichend betrachtete wird,
- aus der Bereichsverschiebung des zweiten Bildbereiches.

Dadurch ist es möglich, verschiedene Bildbereiche mit unterschiedlicher Priorität für die Bestimmung der Verschiebung von Bildern einer Bildsequenz heranzuziehen. Insbesondere ist es möglich, Bildbereiche, die überwiegend vom Bildhintergrund ausgefüllt sind, bevorzugt für die Bestimmung der Verschiebung von Bildern heranzuziehen, wobei die Verwendung des Mittelwertes der Bereichsverschiebungen der zwei ersten Bildbereiche zu einer zuverlässigen Bestimmung der Verschiebung führen. Die zweite Priorität für die Bestimmung der Verschiebung unter Heranziehung der Bereichsverschiebung aus den beiden ersten Bildbereichen wird insbesondere gewählt, um den Einfluß durch bewegte Objekte im Hintergrund zu minimieren, da ein bewegtes Objekt im einen der beiden ersten Bildbereiche dazu führt, daß die Bereichsverschiebung des anderen der beiden Bildbereiche zur Bestimmung der Verschiebung von Bildern einer Bildsequenz herangezogen wird. Auf der dritten Stufe der Priorität wird die Verschiebung von Bildern aus der Bereichsverschiebung des zweiten Bildbereiches, insbesondere eines Bildbereiches, der überwiegend vom Bildvordergrund ausgefüllt wird, herangezogen.

Weiterhin ist es von Vorteil, daß das Verfahren für eine Kopf-Schulter-Aufnahmesituation eingesetzt wird, wobei die beiden ersten Bildbereiche in einem seitlichen Bildbereich links und rechts, vorzugsweise symmetrische zur senkrechten Mittelachse eines vorgegebenen rechteckigen Bildes, gewählt werden, wobei der Abstand der beiden ersten Bildbereiche vom unteren Bildrand größer als der Abstand der beiden ersten Bildbereiche vom oberen Bildrand gewählt werden, wobei der zweite Bildbereich im Bereich der Bildmitte, vorzugsweise symmetrisch zur senkrechten Mittelachse des rechteckigen Bildes, gewählt wird, wobei vorzugsweise der Abstand des zweiten Bildbereiches vom oberen Bildrand größer als der Abstand des zweiten Bildbereiches vom unteren Bildrand gewählt wird. Durch eine derartige Wahl der Bildbereiche ist es, insbesondere für eine Kopf-Schulter-Aufnahmesituation, möglich, die Informationen aus den Bildbereichen sinnvoll für die Bestimmung der Bereichsverschiebungen und sinnvoll mittels einer Priorisierung der Heranziehung von Bereichsverschiebungen für die Bestimmung der Verschiebung von Bildern einer Bildsequenz zu verwenden.

Weiterhin ist es von Vorteil, daß für zwei Bildbereiche, vorzugsweise die zwei ersten Bildbereiche, die Bereichsverschiebung und die Sicherheit der Bestimmung der Bereichsverschiebung durch ein Verfahren mit folgenden Schritten bestimmt wird:
- es wird jeweils die Bereichsverschiebung und ein Korrelationsquotient für jeden der zwei Bildbereiche gebildet,
- es wird eine Schwellwertfunktion in Abhängigkeit der jeweils ermittelten Bereichsverschiebung der beiden Bildbereiche bestimmt,
- es wird jeweils der Korrelationsquotient des einen der zwei Bildbereiche mit dem Wert verglichen, der sich aus Schwellwertfunktion für die Bereichsverschiebung des anderen der zwei Bildbereiche ergibt,
- die Sicherheit der Bestimmung der Bereichsverschiebung für jeweils einen der zwei Bildbereiche wird als hinreichend aufgefaßt, wenn der dem einen Bildbereich entsprechende Korrelationsquotient größer als der mit ihm zu vergleichende Wert der Schwellwertfunktion ist.

Dadurch wird die Bestimmung der Sicherheit der Bereichsverschiebung der zwei ersten Bildbereiche nicht unabhängig voneinander durchgeführt, sondern die ermittelte Bereichsverschiebung des einen der zwei ersten Bildbereiche bestimmt den Wert, den die Schwellwertfunktion annimmt und mit dem die Bereichsverschiebung des anderen der beiden ersten Bildbereiche verglichen wird. Die Bestimmung der Bereichsverschiebung eines Bildbereiches und die Bestimmung ihrer Sicherheit werden somit nicht unabhängig von Bewegungen, insbesondere Bereichsverschiebungen, in anderen Teilen eines Bildes durchgeführt.

Weiterhin ist es von Vorteil, daß die Bestimmung des Korrelationsquotienten eines der beiden Bildbereiche nach einem Verfahren mit folgen Schritten bestimmt wird:
- mittels eines Block-Matching-Verfahrens werden für mehrere mögliche Bereichsverschiebungen Verschiebungskorrelationswerte bestimmt,
- die Bereichsverschiebung, für die die Verschiebungskorrelationswerte maximal werden, wird als Bereichsverschiebung des Bildbereichs angesehen,
- der Korrelationsquotient wird aus dem Maximum der Verschiebungskorrelationswerte, dividiert durch den Mittelwert der bestimmten Verschiebungskorrelationswerte, gebildet.

Dadurch wird die Bereichsverschiebung zum einen durch den gesamten Bildbereich bestimmt, da die Verschiebungskorrelationswerte aus einer Summenbildung über sämtliche Bildpunkte des betrachteten Bildbereichs bestimmt werden. Zum anderen wird der Korrelationsquotient normiert, da das Maximum der Verschiebungskorrelationswerte, aus dem sich die Bereichsverschiebung ergibt, durch den Mittelwert der berechneten Verschiebungskorrelationswerte dividiert wird.

Weiterhin ist es von Vorteil, daß für jede beliebige Bereichsverschiebung, die kleiner als ein vorgegebener erster Schwellwert ist, von der Schwellwertfunktion der Wert eines vorgegebenen zweiten Schwellwertes angenommen wird und daß für jede beliebige Bereichsverschiebung, die größer als der vorgegebene erste Schwellwert ist, von der Schwellwertfunktion der Wert des vorgegebenen zweiten Schwellwertes abzüglich eines Produkts angenommen wird, wobei das Produkt als Faktoren als vorgegebenen Steigungsparameter und eine Differenz umfaßt und wobei die Differenz aus der beliebigen Bereichsverschiebung und dem vorgegebenen ersten Schwellwert gebildet wird. Dies hat den Vorteil, daß für größere ermittelte Bereichsverschiebungen eines Bildbereiches der Bestimmung der Bereichsverschiebung eine ausreichende Sicherheit zugebilligt wird, auch wenn der Korrelationsquotient kleiner ist, was bei einer geringen ermittelten Bereichsverschiebung auf eine weniger gute Korrelation hinweisen würde. Durch die Abhängigkeit der beiden ersten Bildbereiche bei der Bestimmung der Sicherheit für die Bestimmung der Bereichsverschiebung hat die Konstruktion der Schwellwertfunktion zur Folge, daß bei einer relativen großen Bereichsverschiebung des einen der beiden ersten Bildbereiche die Anforderungen an die Sicherheit der Bestimmung der Bereichsverschiebung, das heißt die Anforderungen an die Höhe des Korrelationsquotienten, weniger hoch sind.

In einer weiteren Ausführungsform des Verfahrens zur Bestimmung einer Verschiebung von Bildern einer Bildsequenz ist es von Vorteil, daß Blockverschiebungsinformationen aus einem blockbasierten Codierverfahren zur Bestimmung der Bereichsverschiebung verwendet werden, wobei für jeden der Bildbereiche die Blockverschiebungsinformationen, vorzugsweise Verschiebungsvektoren, von Blöcken, die innerhalb des jeweiligen Bildbereichs liegen, berücksichtigt werden. Dies führt zu einer besonders einfachen und kostengünstigen Durchführung des erfindungsgemäßen Verfahrens, insbesondere dann, wenn zum Beispiel durch eine Hardwareunterstützung Blockverschiebungsinformationen, insbesondere Blockverschiebungsvektoren von kleinen Bildblöcken, ohne oder mit nur geringem Zusatzaufwand zu erhalten sind.

Weiterhin ist es von Vorteil, insbesondere für die zweite Ausführungsform des erfindungsgemäßen Verfahrens, daß für jeden der Bildbereiche zur Bestimmung der Bereichsverschiebung, die eine horizontale und eine vertikale Komponente umfaßt, und zur Bestimmung der Sicherheit der Bestimmung der Bereichsverschiebung ein Verfahren mit folgenden Schritten durchgeführt wird.
- es wird zur Bestimmung der horizontalen Komponente der Bereichsverschiebung eine erste Häufigkeitsverteilung der Häufigkeiten verschiedener Werte der horizontalen Komponente der Blockverschiebungs-Information erstellt, wobei die horizontale Komponente der Bereichsverschiebung dem Wert, für den die erste Häufigkeitsverteilung ihr Hauptmaximum annimmt, der horizontalen Komponente der Blockverschiebungsinformationen entspricht,
- es wird zur Bestimmung der vertikalen Komponente der Bereichsverschiebung eine zweite Häufigkeitsverteilung der Häufigkeiten verschiedener Werte der vertikalen Komponente der Blockverschiebungs-Informationen erstellt, wobei die vertikale Komponente der Bereichsverschiebung dem Wert, für den die zweite Häufigkeitsverteilung ihr Hauptmaximum annimmt, der vertikalen Komponente der Blockverschiebungs-Informationen entspricht,
- die Sicherheit der Bestimmung der Bereichsverschiebung wird als hinreichend betrachtet, wenn sämtliche der folgenden Bedingungen erfüllt sind,
   - der Absolutbetrag, der Differenz der Position der Werte die dem Hauptmaximum und dem Nebenmaximum der ersten Häufigkeitsverteilung entsprechen, der horizontalen Komponente der Blockverschiebungsinformationen ist kleiner als eine vorgegebene erste Differenzschwelle,
   - der Absolutbetrag der Differenz der Position der Werte die dem Hauptmaximum und dem Nebenmaximum der zweiten Häufigkeitsverteilung entsprechen, der vertikalen Komponente der Blockverschiebungsinformationen ist kleiner als eine vorgegebene zweite Differenzschwelle.
   - das Hauptmaximum der ersten Häufigkeitsverteilung ist größer als eine erste Häufigkeitsschwelle,
   - das Hauptmaximum der zweiten Häufigkeitsverteilung ist größer als eine zweite Häufigkeitsschwelle.

Dadurch ist es möglich, mit einfachen Mitteln, insbesondere durch die Betrachtung der Häufigkeiten der auftretenden horizontalen und vertikalen Komponenten der schon vorhandenen Blockverschiebungs-Informationen, zum einen eine Bestimmung der Bereichsverschiebung für einen Bildbereich und zum anderen eine Bestimmung der Sicherheit der Bestimmung der Bereichsverschiebung zu erhalten.

Die erfindungsgemäße Vorrichtung zur Bestimmung einer Verschiebung von Bildern einer Bildsequenz mit den Merkmalen des nebengeordneten Anspruchs 13 hat den Vorteil, daß die Verschiebung insbesondere durch die Implementierung der Verfahrensschritte des erfindungsgemäßen Verfahrens in einem Baustein oder auf eine Leiterplatte, schneller und einfacher bestimmbar ist, was zu einer schnelleren und kostengünstigeren Ausführung des erfindungsgemäßen Verfahrens führt.

### Zeichnung

Ein Ausführungsbeispiel der Erfindung ist in der Zeichnung dargestellt und in der nachfolgenden Beschreibung näher erläutern.

Es zeigen:
Figur 1 ein Blockschaltbild der erfindungsgemäßen Vorrichtung
Figur 2 das Prinzip der Bildstabilisierung durch die Bestimmung einer Verschiebung von Bildern einer Bildsequenz,
Figur 3 ein Ablaufdiagramm zur Bildstabilisierung und
Figur 4 ein Beispiel für die Wahl von Bildbereichen innerhalb eines Bildes für die Durchführung des erfindungsgemäßen Verfahrens.

### Beschreibung des Ausführungsbeispiels:

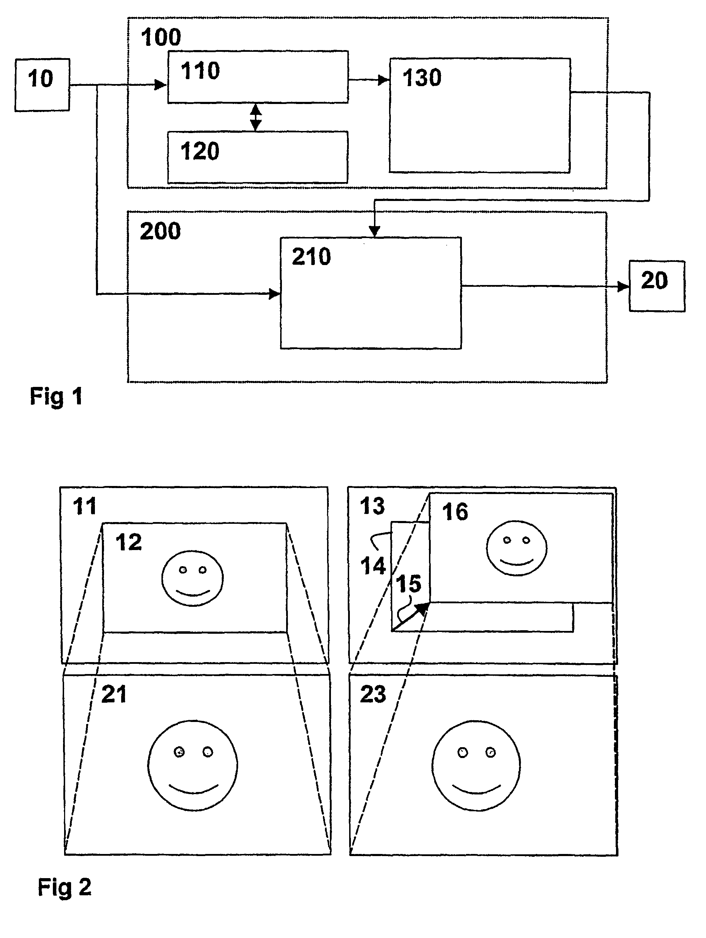

Figur 1 zeigt ein Blockschaltbild der erfindungsgemäßen Vorrichtung zur Bestimmung einer Verschiebung von Bildern einer Bildsequenz. Die erfindungsgemäße Vorrichtung umfaßt einen Eingang 10, einen Ausgang 20 eine Verschiebungsdetektionsschaltung 100 und eine Vergrößerungsschaltung 200. Die Verschiebungsdetektionsschnaltung 100 umfaßt einen Bereichsverschiebungsdetektor 110, einen Bildspeicher 120 und einen Mikrocomputer 130. Weiterhin umfaßt die Verschiebungsdetektionsschaltung 100 einen nicht bezeichneten Eingang der mit dem Eingang 10 der erfindungsgemäßen Vorrichtung, mit dem Bereichsverschiebungsdetektor 110 und mit dem Bildspeicher 120 verbunden ist. Weiterhin umfaßt die Verschiebungsdetektionsschaltung 100 einen nicht bezeichneten Ausgang, der mit dem Mikrocomputer 130 verbunden ist, wobei der Bereichsverschiebungsdetektor 110 ebenfalls mit dem Mikrocomputer 130 verbunden ist. Die Vergrößerungsschaltung 200 umfaßt zwei nicht bezeichnete Eingänge und einen Ausgang, der mit dem Ausgang 20 der Vorrichtung verbunden ist. Die beiden Eingänge der Vergrößerungsschaltung 200 sind jeweils mit einem Vergrößerungsprozessor 210 verbunden, wobei einer der beiden Eingänge der Vergrößerungsschaltung 200 mit dem Eingang 10 der Vorrichtung verbunden ist und wobei der andere der beiden Eingänge der Vergrößerungsschaltung 200 mit dem Ausgang der Verschiebungsdetektionsschaltung 100 verbunden ist.

In Figur 2 ist ein Beispiel zur Bildstabilisierung, beispielsweise zur Kompensation von Kamerabewegungen dargestellt. Ein erstes Eingangsbild 13 wird dabei zu einem ersten Ausgangsbild 23 korrigiert, wobei auf Bildinformationen eines zweiten, vorzugsweise zeitlich davorliegenden, Eingangsbildes 11 zurückgegriffen wird.

Das zweite Eingangsbild 11 umfaßt einen Bildausschnitt, der durch Vergrößerung zum zweiten Ausgangsbild 21 vergrößert wird. Das zweite Eingangsbild 11 wird dabei von der Kamera vollständig aufgenommen, jedoch sieht beispielsweise ein Benutzer der erfindungsgemäßen Vorrichtung lediglich den Bildausschnitt in vergrößerter Form als zweites Ausgangsbild 21. Der Bildausschnitt wird dabei als zweites Bild 12 oder auch als korrigiertes zweites Bild 12 bezeichnet.

Gemäß einer ersten Ausführungsform des erfindungsgemäßen Verfahrens dient das korrigierte zweite Bild 12 der Korrektur des ersten Eingangsbildes 13. Das erste Eingangsbild 13 umfaßt ebenfalls einen Bildausschnitt, der hier als unkorrigiertes erstes Bild 14 bezeichnet wird. Durch Vergleich des unkorrigierten ersten Bildes 14 mit dem zweiten Bild 12 bzw. dem korrigierten zweiten Bild 12 kann eine Verschiebung 15 bestimmt werden, so daß durch die Verschiebung 15 das unkorrigierte erste Bild 14 in ein korrigiertes erstes Bild 16 überführt werden kann. Bei dem Vergleich des unkorrigierten ersten Bildes 14 mit dem zweiten Bild 12 werden insbesondere nicht die gesamten Bilddaten herangezogen, sondern lediglich die Bilddaten aus (nicht dargestellten) Bildbereichen des ersten Bildes 14 und des zweiten Bildes 12.

Gemäß einer zweiten Ausführungsform des erfindungsgemäßen Verfahrens dient das zweite Eingangsbild 11 der Korrektur des ersten Eingangsbildes 13. Durch Vergleich des ersten Eingangsbildes 13 mit dem zweiten Eingangsbild 11 kann die Verschiebung 15 bestimmt werden, so daß durch die Verschiebung 15 das unkorrigierte erste Bild 14 in das korrigierte erste Bild 16 überführt werden kann. Bei dem Vergleich des ersten Eingangsbildes 13 mit dem zweiten Eingangsbild 11 werden insbesondere nicht die gesamten Bilddaten herangezogen, sondern lediglich die Bilddaten aus (nicht dargestellten) Bildbereichen des ersten Eingangsbildes 13 und des zweiten Eingangsbildes 11.

Das korrigierte erste Bild 16 kann nunmehr sowohl gemäß der ersten Ausführungsform als auch gemäß der zweiten Ausführungsform des erfindungsgemäßen Verfahrens dem Benutzer als erstes Ausgangsbild 23 zur Ansicht gebracht werden. Gegenüber dem zweiten Ausgangsbild ist die Verschiebung des ersten Eingangsbildes 13 bzw. des korrigierten ersten Bildes 16 nicht mehr im ersten Ausgangsbild 23 zu bemerken.

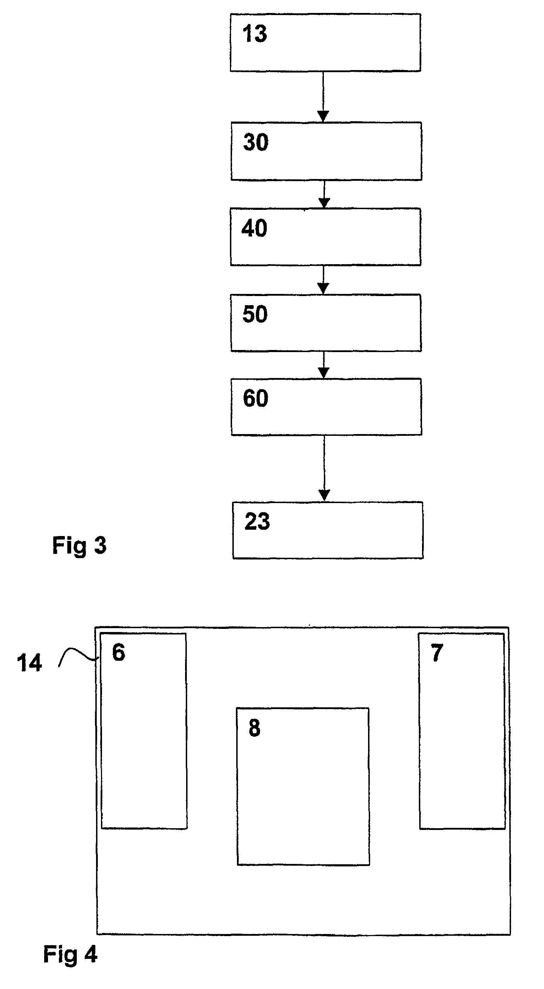

In Figur 3 sind die wesentlichen Verfahrensschritte des erfindungsgemäßen Verfahrens anhand eines Ablaufdiagramms am Beispiel der Korrektur des ersten Eingangsbildes 13 dargestellt. In einem ersten Ablaufschritt 30 wird die Bestimmung der Bereichsverschiebungen von Bildbereichen durchgeführt. Hierbei wird das erste Eingangsbild 13 mit dem korrigierten zweiten, insbesondere zeitlich davorliegenden, Bild 12 oder dem zweiten,insbesondere zeitlich davorliegenden, Eingangsbild 11 verglichen. Anschließend wird in einem Ablaufschritt 40 die Verschiebung des ersten Bildes 14 gemäß dem erfindungsgemäßen Verfahren bestimmt. In einem dritten Ablaufschritt 50 wird die Verschiebung des unkorrigierten ersten Bildes 14 um den Verschiebungsvektor 15 durchgeführt. Das Resultat dieser Operation ist das korrigierte erste Bild 16. Anschließend wird in einem vierten Ablaufschritt 60 eine Vergrößerung des korrigierten ersten Bildes 16 durchgeführt, die zu dem ersten Ausgangsbild 23 führt.

Zur Korrektur eines weiteren Eingangsbildes gemäß dem erfindungsgemäßen Verfahren kann das Resultat des dritten Ablaufschrittes 50 dem ersten Ablaufschritt 30 dadurch zugänglich gemacht werden, indem es, vorzugsweise in dem Bildspeicher 120, abgespeichert wird. Das Resultat des dritten Ablaufschrittes 50 ist das korrigierte erste Bild 16 das somit an die Stelle des korrigierten zweiten Bildes 12 tritt und im Zusammenhang mit der Korrektur des weiteren Eingangsbildes zu einer Bestimmung von Bereichsverschiebungen im ersten Ablaufschritt 30 herangezogen wird.

Alternativ dazu kann in dem Bildspeicher 120 auch das erste Eingangsbild 13 beziehungsweise das unkorrigierte erste Bild 14 zusammen mit der bestimmten Verschiebung 15 zur Korrektur eines weiteren Eingangsbildes gespeichert werden.

In Figur 4 ist ein Beispiel einer Verteilung von Bildausschnitten 6,7,8 innerhalb des ersten Eingangsbildes 14 dargestellt. Dabei sind zwei erste Bildbereiche 6,7, insbesondere für die Anwendung des erfindungsgemäßen Verfahrens auf eine Kopf-Schulter-Aufnahmesituation, symmetrisch zur senkrechten Mittelachse des vorgegebenen rechteckigen ersten Bildes 14 gewählt. Der Abstand der beiden ersten Bildbereiche 6,7 vom unteren Bildrand ist dabei größer als der Abstand der beiden ersten Bildbereiche 6,7 vom oberen Bildrand.
Ein zweiter Bildbereich 8 ist im Bereich der Bildmitte des ersten Bildes 14, vorzugsweise symmetrisch zur senkrechten Mittelachse des rechteckigen Bildes, gewählt, wobei vorzugsweise der Abstand des zweiten Bildbereichs 8 vom oberen Bildrand größer als der Abstand des zweiten Bildbereiches vom unteren Bildrand gewählt ist.

Das erfindungsgemäße Verfahren zur Bestimmung einer Verschiebung 15 von Bildern einer Bildsequenz kann vorzugsweise zur Bildstabilisierung zur Kompensation der Kamerabewegungen in Consumer Video Kameras (Camcordern) eingesetzt werden. Das Verfahren eignet sich insbesondere im Hinblick auf die digitale Bewegtbildstabilisierung für mobile Bewegtbild-Kommunikationseinrichtungen. Es sollen Bewegungen, die durch die mobile Nutzung einer Bewegtbild-Kommunikationseinrichtung verursacht werden, reduziert bzw. möglichst eliminiert werden.
Das Grundprinzip des Verfahrens besteht darin, die Kamerabewegung aus der relativen Verschiebung aufeinanderfolgender Bilder abzuleiten und aus einem Eingangsbild, beispielsweise dem ersten Eingangsbild 13, den Teilbereich, beispielsweise das korrigierte erste Bild 16, zu extrahieren, der aufgrund der ermittelten Verschiebung 15, insbesondere des korrigierten ersten Bildes 16 gegenüber dem unkorrigierten ersten Bild 14, die Kamerabewegung kompensiert.

Bei dem erfindungsgemäßen Verfahren wird eine Mehrzahl von Bildbereichen 6,7,8 zur Bestimmung der Verschiebung 15 zur Verfügung gestellt. Die Bildbereiche können durch ihre Position und ihre Abmessungen innerhalb des Bildes eindeutig bestimmt werden. Durch die vorteilhafte Wahl der Position sowie der Abmessungen der Bildbereiche 6,7,8 kann nun in besonders einfacher Weise eine Trennung einer Bildbewegung, die vorzugsweise von einer Kamerabewegung hervorgerufen wird, von eine Zusatzbewegung, die sich der Bildbewegung in Teilbereichen des zu korrigierenden Bildes überlagert, durchgeführt werden. Dazu wird die Wahrscheinlichkeit, daß die Bildbewegung ohne die Zusatzbewegung auftritt an unterschiedlichen Positionen der Bilder einer Bildsequenz bestimmt, woraus sich innerhalb des Bildes bevorzugte Anteile ergeben, mittels derer eine Trennung der Bildbewegung von der Zusatzbewegung erreicht werden kann. So ist beispielsweise für die spezielle Aufnahmesituation eines Sprechers, der sich zentriert in der Bildmitte befindet, die Wahl der in der Figur 4 dargestellten Bildbereiche 6,7,8 besonders vorteilhaft. Die besonderen Eigenschaften der Aufnahmesituation werden als A-Priori-Kenntnisse bei der Auswahl und der Festlegung der Bildbereiche 6,7,8 verwertet. Gemäß dieser Aufnahmesituation kann angenommen werden, daß die beiden ersten Bildbereiche 6,7 im wesentlichen im Hintergrund des Bildes und der zweite Bildbereich 8 im wesentlichen im Vordergrund befinden. Dies bedeutet, daß die beiden ersten Bildbereiche 6,7 hauptsächlich mit Bilddaten aus dem Bildhintergrund ausgefüllt sind und das der zweite Bildbereich 8 hauptsächlich mit Bilddaten aus dem Bildvordergrund ausgefüllt ist. Hieraus läßt sich eine Priorisierung der beiden ersten Bildbereiche 6,7 vorteilhaft anwenden, so daß die Bestimmung einer Verschiebung 15 von Bildern einer Bildsequenz sich bevorzugt aus der Bestimmung der Bereichsverschiebung der beiden ersten Bildbereiche 6,7 ergibt. Nur wenn die Verwendung von Bereichsverschiebungen aus den beiden ersten Bildbereichen 6,7, lediglich eine Bereichsverschiebung zuläßt, die mit einer großen Unsicherheit bzw. mit einer ungenügend großen Sicherheit behaftet ist, wird der zweite Bildbereich 8 zur Bestimmung der Verschiebung 15 von Bildern herangezogen. Diese Priorisierung ist im angegebenen Beispiel gleichbedeutend damit, daß die Bildstabilisierung bevorzugt mittels Bildhintergrundinformation durchgeführt wird. Hierbei bezieht sich das Verfahren jedoch nicht ausschließlich auf die Unterscheidung und unterschiedliche Priorisierung zur Bestimmung einer Verschiebung von Bildern einer Bildsequenz von Hintergrund- oder Vordergrundinformationen, sondern auch beispielsweise auf die Heranziehung von Kriterien wie Kantendetektion, Abwesenheit von Kantendetektion oder ähnlichem.

Die beiden ersten Bildbereiche 6,7, haben im angegebenen Beispiel im Qcif-Format typischerweise eine Ausdehnung von 120 Bildpunkten in vertikaler Richtung und 40 Bildpunkten in horizontaler Richtung. Der zweite Bildbereich 8 erstreckt sich bei diesem Bildformat typischerweise über 135 Bildpunkte in vertikaler und 85 Bildpunkte in horizontaler Richtung.

Für das Verfahren zur Bestimmung einer Verschiebung 15 von Bildern einer Bildsequenz, insbesondere zur Bildstabilisierung mit mehreren Bildbereichen 6, 7, 8, die jeweils im wesentlichen den Vordergrund oder den Hintergrund abdecken, wird jeweils die günstigste Kombination der Informationen aus den Teilbereichen ermittelt um den Einfluß durch bewegte Objekte im Hintergrund zu minimieren. Mit Hilfe eines Entscheidungskriteriums wird ein bewegtes Objekt in den Bildbereichen, die größtenteils durch den Hintergrund abgedeckt werden, detektiert. Falls die beiden zweiten Bildbereiche 6,7 kein bewegtes Objekt und somit auch keine der Bildbewegung, insbesondere hervorgerufen durch eine Kamerabewegung, überlagerte Zusatzbewegung durch das bewegte Objekt enthalten, wird die zu bestimmende Verschiebung aus dem Mittelwert der berechneten Bereichsverschiebungen der beiden ersten Bildbereichen 6, 7 bestimmt. Falls jeweils ein erster Bildbereich 6,7 ein bewegtes Objekt enthält, wird die zu bestimmende Verschiebung 15 aus dem jeweils anderen Bildbereich ohne bewegtes Objekt ermittelt. Falls beide ersten Bildbereiche 6,7 ein bewegtes Objekt enthalten, wird die Information zur Bestimmung der Bewegung aus dem zweiten Bildbereich 8, dem Vordergrundteilgebiet, genutzt. Zur Bestimmung der Bereichsverschiebung für einen Bildbereich 6,7,8 werden erfindungsgemäß alternativ zwei Methoden angewandt, je nachdem ob Blockverschiebungsinformationen aus einem blockbasierten Codierverfahren, beispielsweise aus einem blockbasierten Übertragungsverfahren zur Bandbreitenreduktion, mit einfachen Mitteln zugänglich sind oder nicht. Wenn Blockverschiebungsinformationen nicht einfach zugänglich sind, wird vorzugsweise eine Blockmatching-Methode zur Bestimmung der Bereichsverschiebung angewendet, mit dem eine Zusatzbewegung, das heißt eine lokale Bewegung innerhalb eines der beiden ersten Bildbereiche 6,7, detektiert werden kann. Die Detektion einer in einem Bildbereich 6, 7, 8 auftretenden lokalen Bewegung, z.B. ein erscheinendes Objekt, kann durch Auswertung der Verschiebungskorrelationswerte aus dem Blockmatching-Verfahren erfolgen. Hierzu wird das Verhältnis des Mittelwertes der Verschiebungskorrelationswerte zum Maximum der Korrelationswerte mit einer adaptiven Schwellwertfunktion verglichen. Zur Bestimmung des Mittelwertes der Verschiebungskorrelationswerte wird die Summe über alle bestimmten Korrelationswerte gebildet und anschließend durch deren Anzahl dividiert. Das Maximum der Verschiebungskorrelationswerte wird für eine bestimmte Verschiebung angenommen. Diejenige Bereichsverschiebung, die dem Maximum der Verschiebungskorrelationswerte entspricht, wird als Bereichsverschiebung angenommen. Der Korrelationsquotient entspricht dem Maximum der Verschiebungskorrelationswerte geteilt durch den Mittelwert der Verschiebungskorrelationswerte und ist somit genormt.

Eine Zusatzbewegung, das heißt eine lokale Bewegung innerhalb des Bildbereiches, ist dann detektiert, wenn der Korrelationsquotient kleiner ist als der Wert einer adaptiven Schwellwertfunktion. Die adaptierte Schwellwertfunktion ist abhängig von der Länge eines Verschiebungsvektors, der eine Bereichsverschiebung angibt. Erfindungsgemäß wird für die Detektion einer Zusatzbewegung beziehungsweise einer lokalen Bewegung in einem der beiden ersten Bildbereiche 6,7 der Korrelationsquotient für den betrachteten ersten Bereich 6,7 mit dem Wert der adaptiven Schwellwertfunktion verglichen, wobei sich der Wert für die adaptive Schwellwertfunktion aus der Vektorlänge der Verschiebung 15 des anderen der beiden ersten Bildbereiche 6,7, ergibt. Dabei ist die Schwellwertfunktion folgendermaßen definiert:
- für jede beliebige Vektorlänge des Bereichsverschiebungsvektors beziehungsweise für jede beliebige Verschiebung, die kleiner ist als ein vorgegebener erster Schwellwert, wird von der Schwellwertfunktion der Wert eines vorgegebenen zweiten Schwellwertes angenommen,
- für jede beliebige Vektorlänge des Bereichsverschiebungsvektors, die größer ist als der vorgegeben erste Schwellwert, wird von der Schwellwertfunktion der Wert des vorgegebenen zweiten Schwellwertes abzüglich eines Produkts angenommen, wobei das Produkt als Faktoren einen vorgegebenen Steigungsparamenter und eine Differenz umfaßt, und wobei die Differenz aus der beliebigen Bereichsverschiebung und dem vorgegebenen ersten Schwellwert gebildet wird.

Die zweite Methode zur Bestimmung der Verschiebung von Bildern einer Bildsequenz beruht insbesondere auf der Verwendung von Blockverschiebungs-Informationen aus einem blockbasierten Codierverfahren. Alternativ zur Verschiebungsberechnung mittels eines Blockmatching-Verfahrens für einen Bildbereich 6, 7, 8 können auch die Verschiebungsvektoren kleiner Blöcke, zum Beispiel der Größe 8x8 oder 16x16 zur Bestimmung der Bereichsverschiebung der Bildbereiche 6, 7, 8 genutzt werden und somit direkt Informationen aus einem Codierverfahren zur Reduktion des Rechenaufwands verwendet werden. Dieser Ansatz ist insbesondere dann von Interesse, falls zum Beispiel durch eine Hardwareunterstützung die Blockverschiebungsvektoren ohne oder mit nur geringem Zusatzaufwand zu erhalten sind. Die Detektion einer lokalen Bewegung innerhalb eines Bildbereiches 6, 7, 8, insbesondere eines der beiden ersten Bildbereiche 6,7, kann besonders einfach durchgeführt werden, wenn Verschiebungsvektoren von kleinen Blöcken des Bildes, zum Beispiel aus einem Codierverfahren bekannt sind. Dabei werden zunächst alle Verschiebungsvektoren für Blöcke, die innerhalb eines der Bildbereiche 6,7,8 liegen, dem entsprechenden Bildbereich 6,7,8 zugeordnet. Von den jeweils zugeordneten Verschiebungsvektoren werden für die horizontalen und vertikalen Komponenten separate Häufigkeitsverteilungen beziehungsweise Histogramme erstellt. Es ergeben sich somit für jeden Bildbereich 6,7,8 eine erste Häufigkeitsverteilung für die horizontale Komponente und eine zweite Häufigkeitsverteilung für die vertikale Komponente der Verschiebungsvektoren der Bildblöcke. Die Detektion einer Zusatzbewegung bzw. lokalen Bewegung erfolgt über die Analyse der einem Bildbereich zugeordneten Häufigkeitsverteilungen. Falls die Differenz der Positionen zwischen dem Hauptmaximum und dem größten Nebenmaximum einer der beiden zugeordneten Häufigkeitsverteilungen einen bestimmten Schwellwert überschreitet und die Größe der Hauptmaxima einen Schwellwert unterschreitet ist eine lokale Bewegung detektiert.

Die Bestimmung einer lokalen oder zusätzlichen Bewegung innerhalb eines Bildbereiches bedeutet, daß die Bestimmung der Bereichsverschiebung nicht mit ausreichender Sicherheit durchgeführt werden konnte. Die Bestimmung der Sicherheit der Bestimmung der Bereichsverschiebung führt damit zu einem negativen Ergebnis was die Bestimmung der Bereichsverschiebung betrifft.
Detaillierter kann das Verfahren zur Bestimmung der Bereichsverschiebung, die eine horizontale und eine vertikale Komponente umfaßt, und zur Bestimmung der Sicherheit der Bestimmung der Bereichsverschiebung folgendermaßen beschrieben werden:
- es wird zur Bestimmung der horizontalen Komponente der Bereichsverschiebung eine erste Häufigkeitsverteilung der Häufigkeiten verschiedener Werte der horizontalen Komponente der Blockverschiebungsinformationen erstellt, wobei die horizontale Komponente der Bereichsverschiebung dem Wert, für den die erste Häufigkeitsverteilung ihr Hauptmaximum annimmt, der horizontalen Komponente der Blockverschiebungs-Informationen entspricht,
- es wird zur Bestimmung der vertikalen Komponente der Bereichsverschiebung eine zweite Häufigkeitsverteilung der Häufigkeiten verschiedener Werte der vertikalen Komponente der Blockverschiebungs-Informationen erstellt, wobei die vertikale Komponente der Bereichsverschiebung dem Wert, für den die zweite Häufigkeitverteilung ihr Hauptmaximum annimmt, der vertikalen Komponente der Blockverschiebungsinformationen entspricht,
- die Sicherheit der Bestimmung der Bereichsverschiebung wird als hinreichend betrachtet, wenn sämtliche der folgenden Bedingungen erfüllt sind:
   - der Absolutbetrag der Differenz der Position der Werte, die dem Hauptmaximum und dem Nebenmaximum der ersten Häufigkeitsverteilung entsprechen, der horizontalen Komponente der Blockverschiebungsinformationen ist kleiner als eine vorgegebene erste Differenzschwelle,
   - der Absolutbetrag der Differenz der Position der Werte, die dem Hauptmaximum und dem Nebenmaximum der zweiten Häufigkeitsverteilung entsprechen, der vertikalen Komponente der Blockverschiebungs-Informationen ist kleiner als eine vorgegebene zweite Differenzschwelle,
   - das Hauptmaximum der ersten Häufigkeitsverteilung ist größer als eine erste Häufigkeitsschwelle,
   - das Hauptmaximum der zweiten Häufigkeitsverteilung ist größer als eine zweite Häufigkeitsschwelle.

Alternativ zum Blockmatching-Verfahren für einen betrachteten Bildbereich 6,7,8 können somit zur Bestimmung der Verschiebung von Bildern einer Bildsequenz Blockverschiebungsvektoren eines blockorientierten Bildcodierverfahens genutzt werden, um den Rechenaufwand zu reduzieren. Für das Blockmatching-Verfahren wurde ein Kriterium angegeben, das sich zur Detektion von lokalen Bewegungen innerhalb des relevanten Bildbereichs 6,7,8 eignet und welches gleichbedeutend damit ist, daß die Sicherheit der Bestimmung der Bereichsverschiebung nicht ausreichend ist. Für das Verschiebungs-Schätzverfahrens mittels Blockverschiebungsvektoren wurde ebenfalls ein Kriterium zur Detektion von lokalen Bewegungen innerhalb der relevanten Bildbereiche 6,7,8 angegeben.

## Patentansprüche

1. Verfahren zur Bestimmung einer Verschiebung (15) von Bildern einer Bildsequenz, insbesondere für die Kompensation einer Kamerabewegung, wobei zur Bestimmung der Verschiebung (15) eine Mehrzahl von Bildbereichen (6,7,8) der Bilder zur Verfügung steht, wobei jeder Bildbereich (6,7,8) jeweils an einer vorgegebenen Position der Bilder vorgesehen ist, wobei jeder Bildbereich (6,7,8) jeweils vorgegebene Abmessungen, insbesondere vorgegebene Anzahlen von Bildpunkten in verschiedene Richtungen des Bildes, aufweist, **dadurch gekennzeichnet,**
**daß** eine Trennung einer Bildbewegung, vorzugsweise hervorgerufen durch eine Kamerabewegung, von einer Zusatzbewegung, die sich der Bildbewegung in Teilbereichen des zu korrigierenden Bildes überlagert, durch folgende Schritte durchgeführt wird:
- an unterschiedlichen Positionen eines Bildes wird die Wahrscheinlichkeit, daß die Bildbewegung ohne die Zusatzbewegung auftritt, bestimmt,
- für jeweils einen Bildbereich (6,7,8) werden die Position und die Abmessungen in Abhängigkeit der Wahrscheinlichkeit, daß innerhalb des einen Bildbereichs (6,7,8) die Bildbewegung ohne die Zusatzbewegung auftritt, bestimmt und fest vorgegeben,
- aus der Mehrzahl der Bildbereiche (6,7,8) wird wenigstens ein erster Bildbereich (6,7) bevorzugt zur Bestimmung der Verschiebung (15) herangezogen.

2. Verfahren nach Anspruch 1, **dadurch gekennzeichnet, daß** ein erstes Bild (14) der Bildsequenz korrigiert wird, indem die Verschiebung (15) entweder aus Bilddaten des ersten Bildes (14) und aus Bilddaten eines zweiten, vorzugsweise dem ersten Bild unmittelbar vorangehenden, Bildes (12) der Bildsequenz oder aus Bilddaten des ersten Bildes (14) und aus Bilddaten eines zweiten, vorzugsweise dem ersten Bild unmittelbar vorangehenden Eingangsbildes (11) der Bildsequenz bestimmt wird, wobei als Verschiebung (15) eine Bereichsverschiebung eines Bildbereichs (6,7,8) herangezogen wird, wobei die Bereichsverschiebung eines Bildbereichs (6,7,8) der Mehrzahl der Bildbereiche (6,7,8) entweder aus den Bilddaten des ersten Bildes (14) und des zweiten Bildes (12) innerhalb des einen Bildbereichs (6,7,8) oder aus den Bilddaten des ersten Bildes (14) und des zweiten Eingangsbildes (11) innerhalb des einen Bildbereichs (6,7,8) bestimmt wird.

3. Verfahren nach Anspruch 1 oder 2, **dadurch gekennzeichnet, daß** die Position und die Abmessungen des wenigstens einen ersten Bildbereichs (6,7) so gewählt werden, daß der wenigstens eine erste Bildbereich (6,7) der zu korrigierenden Bilder überwiegend vom Bildhintergrund ausgefüllt wird.

4. Verfahren nach einem der vorhergehenden Ansprüche, **dadurch gekennzeichnet, daß** die Position und die Abmessungen wenigstens eines zweiten Bildbereichs (8) so gewählt werden, daß der wenigstens eine zweite Bildbereich (8) der zu korrigierenden Bilder überwiegend vom Bildvordergrund ausgefüllt wird.

5. Verfahren nach einem der vorhergehenden Ansprüche, **dadurch gekennzeichnet, daß** der wenigstens eine erste und/oder der wenigstens eine zweite Bildbereich (6,7,8) zur Bestimmung der Verschiebung (15) in Abhängigkeit einer Sicherheit für die Bestimmung der Bereichsverschiebung herangezogen wird.

6. Verfahren nach einem der vorhergehenden Ansprüche, **dadurch gekennzeichnet, daß** zwei erste Bildbereiche (6,7) und ein einzelner zweiter Bildbereich (8) zur Bildkorrektur zur Verfügung stehen, wobei die Bestimmung der Verschiebung (15) auf eine der folgenden drei Arten mit absteigender Priorität durchgeführt wird:
- aus dem Mittelwert der Bereichsverschiebungen der zwei ersten Bildbereiche (6,7) wenn die Sicherheit der Bestimmung der Bereichsverschiebungen der beiden ersten Bildbereiche (6,7) als hinreichend betrachtet wird,
- aus der Bereichsverschiebung desjenigen der zwei ersten Bildbereiche (6,7) bei dem die Sicherheit der Bestimmung der Bereichsverschiebung als hinreichend betrachtet wird,
- aus der Bereichsverschiebung des zweiten Bildbereiches (8).

7. Verfahren nach Anspruch 6, **dadurch gekennzeichnet, daß** das Verfahren für eine Kopf-Schulter-Aufnahmesituation eingesetzt wird, wobei die beiden ersten Bildbereiche (6,7) in einem seitlichen Bereich links und rechts, vorzugsweise symmetrisch zur senkrechten Mittelachse eines vorgegebenen rechteckigen Bildes, gewählt werden, wobei der Abstand der beiden ersten Bildbereiche (6,7) vom unteren Bildrand größer als der Abstand der beiden ersten Bildbereiche (6,7) vom oberen Bildrand gewählt werden, wobei der zweite Bildbereich (8) im Bereich der Bildmitte, vorzugsweise symmetrisch zur senkrechten Mittelachse des rechteckigen Bildes, gewählt wird, wobei vorzugsweise der Abstand des zweiten Bildbereiches (8) vom oberen Bildrand größer als der Abstand des zweiten Bildbereiches (8) vom unteren Bildrand gewählt wird.

8. Verfahren nach einem der Ansprüche 5 bis 7, **dadurch gekennzeichnet, daß** für zwei Bildbereiche (6,7), vorzugsweise die zwei ersten Bildbereiche (6,7), die Bereichsverschiebung und die Sicherheit der Bestimmung der Bereichsverschiebung durch ein Verfahren mit folgenden Schritten bestimmt wird:
- es wird jeweils die Bereichsverschiebung und ein Korrelationquotient für jeden der zwei Bildbereiche (6,7) gebildet,
- es wird eine Schwellwertfunktion in Abhängigkeit der jeweils ermittelten Bereichsverschiebung der beiden Bildbereiche (6,7) bestimmt,
- es wird jeweils der Korrelationquotient des einen der zwei Bildbereiche (6,7) mit dem Wert verglichen, der sich aus der Schwellwertfunktion für die Bereichsverschiebung des anderen der zwei Bildbereiche (6,7) ergibt,
- die Sicherheit der Bestimmung der Bereichsverschiebung für jeweils einen der zwei Bildbereiche (6,7) wird als hinreichend aufgefaßt, wenn der dem einen Bildbereich (6,7) entsprechende Korrelationsquotient größer ist als der mit ihm zu vergleichende Wert der Schwellwertfunktion.

9. Verfahren nach Anspruch 8, **dadurch gekennzeichnet, daß** die Bestimmung des Korrelationsquotienten eines der beiden Bildbereiche (6,7) nach einem Verfahren mit folgenden Schritten bestimmt wird:
- mittels eines Blockmatching-Verfahrens werden für mehrere mögliche Bereichs-Verschiebungen Verschiebungskorrelationswerte bestimmt,
- die Bereichsverschiebung, für die die Verschiebungskorrelationswerte maximal werden, wird als Bereichsverschiebung des Bildbereichs (6,7) angesehen,
- der Korrelationsquotient wird aus dem Maximum der Verschiebungskorrelationswerte, dividiert durch den Mittelwert der bestimmten Verschiebungskorrelationswerte, gebildet.

10. Verfahren nach Anspruch 8, **dadurch gekennzeichnet, daß** für jede beliebige Bereichsverschiebung, die kleiner als ein vorgegebener erster Schwellwert ist, von der Schwellwertfunktion der Wert eines vorgegebenen zweiten Schwellwertes angenommen wird und daß für jede beliebige Bereichsverschiebung, die größer als der vorgegebene erste Schwellwert ist, von der Schwellwertfunktion der Wert des vorgegebenen zweiten Schwellwerts abzüglich eines Produkts angenommen wird, wobei das Produkt als Faktoren einen vorgegebenen Steigungsparameter und eine Differenz umfaßt und wobei die Differenz aus der beliebigen Bereichsverschiebung und dem vorgegebenen ersten Schwellwert gebildet wird.

11. Verfahren nach Anspruch 5 bis 7, **dadurch gekennzeichnet, daß** Blockverschiebungsinformationen aus einem blockbasierten Codierverfahren zur Bestimmung der Bereichsverschiebung verwendet werden, wobei für jeden der Bildbereiche (6,7,8) die Blockverschiebungs-Informationen, vorzugsweise Verschiebungsvektoren, von Blöcken, die innerhalb des jeweiligen Bildbereichs (6,7,8) liegen, berücksichtigt werden.

12. Verfahren nach Anspruch 11, **dadurch gekennzeichnet, daß** für jeden der Bildbereiche zur Bestimmung der Bereichsverschiebung, die eine horizontale und eine vertikale Komponente umfaßt, und zur Bestimmung der Sicherheit der Bestimmung der Bereichsverschiebung ein Verfahren mit folgenden Schritten durchgeführt wird:
- es wird zur Bestimmung der horizontalen Komponente der Bereichsverschiebung eine erste Häufigkeitsverteilung der Häufigkeiten verschiedener Werte der horizontalen Komponente der Blockverschiebungsinformationen erstellt, wobei die horizontale Komponente der Bereichsverschiebung dem Wert, für den die erste Häufigkeitsverteilung ihr Hauptmaximum annimmt, der horizontalen Komponente der Blockverschiebungsinformationen entspricht,
- es wird zur Bestimmung der vertikalen Komponente der Bereichsverschiebung eine zweite Häufigkeitsverteilung der Häufigkeiten verschiedener Werte der vertikalen Komponente der Blockverschiebungsinformationen erstellt, wobei die vertikale Komponente der Bereichsverschiebung dem Wert, für den die zweite Häufigkeitsverteilung ihr Hauptmaximum annimmt, der vertikalen Komponente der Blockverschiebungsinformationen entspricht,
- die Sicherheit der Bestimmung der Bereichsverschiebung wird als hinreichend betrachtet, wenn sämtliche der folgenden Bedingungen erfüllt sind:
- der Absolutbetrag der Differenz der Position der Werte, die dem Hauptmaximum und dem Nebenmaximum der ersten Häufigkeitsverteilung entsprechen, der horizontalen Komponente der Blockverschiebungsinformationen ist kleiner als eine vorgegebene erste Differenzschwelle,
- der Absolutbetrag der Differenz der Position der Werte, die dem Hauptmaximum und dem Nebenmaximum der zweiten Häufigkeitsverteilung entsprechen, der vertikalen Komponente der Blockverschiebungsinformationen ist kleiner als eine vorgegebene zweite Differenzschwelle,
- das Hauptmaximum der ersten Häufigkeitsverteilung ist größer als eine erste Häufigkeitsschwelle,
- das Hauptmaximum der zweiten Häufigkeitsverteilung ist größer als eine zweite Häufigkeitsschwelle.

13. Vorrichtung zur Bestimmung einer Verschiebung (15) von Bildern einer Bildsequenz, in derem Verfahren gemäß einem der vorhergehenden Ansprüche ausgeführt wird, wobei die Vorrichtung eine Verschiebungsdetektionsschaltung (100) umfaßt, welche die Verschiebung (15) bestimmt.

## Claims

1. Method for determining a displacement (15) of images of an image sequence, in particular for the compensation of a camera movement, a plurality of image areas (6, 7, 8) of the images being available for determining the displacement (15), each image area (6, 7, 8) in each case being provided at a predetermined position of the images, each image area (6, 7, 8) in each case having predetermined dimensions, in particular predetermined numbers of pixels in different directions of the image, **characterized**
**in that** a separation of an image motion, preferably caused by a camera movement, from an additional motion which is superposed on the image motion in sub-areas of the image to be corrected is carried out by means of the following steps:
- the probability of the image motion occurring without the additional motion is determined at various positions of an image,
- for a respective image area (6, 7), the position and the dimensions are determined and fixedly prescribed in a manner dependent on the probability of the image motion occurring without the additional motion within the one image area (6, 7, 8),
- from the plurality of image areas (6, 7, 8), at least one first image area (6, 7) is preferably used for determining the displacement (15).

2. Method according to Claim 1, **characterized in that** a first image (14) of the image sequence is corrected by the displacement (15) being determined either from image data of the first image (14) and from image data of a second image (12), which preferably directly precedes the first image, of the image sequence or from image data of the first image (14) and from image data of a second input image (11), which preferably directly precedes the first image, of the image sequence, an area displacement of an image area (6, 7, 8) being used as the displacement (15), the area displacement of an image area (6, 7, 8) of the plurality of image areas (6, 7, 8) being determined either from the image data of the first image (14) and of the second image (12) within the one image area (6, 7, 8) or from the image data of the first image (14) and of the second input image (11) within the one image area (6, 7, 8).

3. Method according to Claim 1 or 2, **characterized in that** the position and the dimensions of the at least one first image area (6, 7) are chosen in such a way that the at least one first image area (6, 7) of the images to be corrected is predominantly filled by the image background.

4. Method according to one of the preceding claims, **characterized in that** the position and the dimensions of at least one second image area (8) are chosen in such a way that the at least one second image area (8) of the images to be corrected is predominantly filled by the image foreground.

5. Method according to one of the preceding claims, **characterized in that** the at least one first and/or the at least one second image area (6, 7, 8) is used for determining the displacement (15) in a manner dependent on a certainty for the determination of the area displacement.

6. Method according to one of the preceding claims, **characterized in that** two first image areas (6, 7) and a single second image area (8) are available for the image correction, the determination of the displacement (15) being carried out in one of the following three ways with declining priority:
- from the average value of the area displacements of the two first image areas (6, 7) if the certainty of the determination of the area displacements of the two first image areas (6, 7) is regarded as sufficient,
- from the area displacement of that one of the two first image areas (6, 7) in the case of which the certainty of the determination of the area displacement is regarded as sufficient,
- from the area displacement of the second image area (8).

7. Method according to Claim 6, **characterized in that** the method is used for a head/shoulders recording situation, the two first image areas (6, 7) being chosen in a lateral area to the left and right, preferably symmetrically with respect to the perpendicular centre axis, of a predetermined rectangular image, the distance between the two first image areas (6, 7) and the lower image edge being chosen to be greater than the distance between the two first image areas (6, 7) and the upper image edge, the second image area (8) being chosen in the region of the image centre, preferably symmetrically with respect to the perpendicular centre axis of the rectangular image, the distance between the second image area (8) and the upper image edge preferably being chosen to be greater than the distance between the second image area (8) and the lower image edge.

8. Method according to one of Claims 5 to 7, **characterized in that**, for two image areas (6, 7), preferably the two first image areas (6, 7), the area displacement and the certainty of the determination of the area displacement is determined by a method having the following steps:
- in each case the area displacement and a correlation quotient are formed for each of the two image areas (6, 7),
- a threshold value function is determined in a manner dependent on the area displacement respectively determined for the two image areas (6, 7),
- in each case the correlation quotient of one of the two image areas (6, 7) is compared with the value which results from the threshold value function for the area displacement of the other of the two image areas (6, 7),
- the certainty of the determination of the area displacement for in each case one of the two image areas (6, 7) is interpreted as sufficient if the correlation quotient corresponding to the one image area (6, 7) is greater than the value of the threshold value function that is to be compared with it.

9. Method according to Claim 8, **characterized in that** the determination of the correlation quotient of one of the two image areas (6, 7) is determined according to a method having the following steps:
- by means of a block matching method, displacement correlation values are determined for a plurality of possible area displacements,
- the area displacement for which the displacement correlation values attain the maximum is regarded as area displacement of the image area (6, 7),
- the correlation quotient is formed from the maximum of the displacement correlation values divided by the average value of the specific displacement correlation values.

10. Method according to Claim 8, **characterized in that**, for each arbitrary area displacement which is smaller than a predetermined first threshold value, the threshold value function assumes the value of a predetermined second threshold value, and **in that**, for each arbitrary area displacement which is larger than the predetermined first threshold value, the threshold value function assumes the value of the predetermined second threshold value minus a product, the product comprising, as factors, a predetermined gradient parameter and a difference, and the difference being formed from the arbitrary area displacement and the predetermined first threshold value.

11. Method according to Claims 5 to 7, **characterized in that** the block displacement information items from a block-based coding method are used for determining the area displacement, the block displacement information items, preferably displacement vectors, of blocks lying within the respective image area (6, 7, 8) being taken into account for each of the image areas (6, 7, 8).

12. Method according to Claim 11, **characterized in that**, for each of the image areas, in order to determine the area displacement, which comprises a horizontal and a vertical component, and in order to determine the certainty of the determination of the area displacement, a method having the following steps is carried out:
- in order to determine the horizontal component of the area displacement, a first frequency distribution of the frequencies of different values of the horizontal component of the block displacement information items is created, the horizontal component of the area displacement corresponding to the value, for which the first frequency distribution assumes its primary maximum, of the horizontal component of the block displacement information items,
- in order to determine the vertical component of the area displacement, a second frequency distribution of the frequencies of different values of the vertical component of the block displacement information items is created, the vertical component of the area displacement corresponding to the value, for which the second frequency distribution assumes its primary maximum, of the vertical component of the block displacement information items,
- the certainty of the determination of the area displacement is regarded as sufficient if all of the following conditions are satisfied:
- the absolute value of the difference in the position of the values, which correspond to the primary maximum and the secondary maximum of the first frequency distribution, of the horizontal component of the block displacement information items is smaller than a predetermined first difference threshold,
- the absolute value of the difference in the position of the values, which correspond to the primary maximum and the secondary maximum of the second frequency distribution, of the vertical component of the block displacement information items is smaller than a predetermined second difference threshold,
- the primary maximum of the first frequency distribution is larger than a first frequency threshold,
- the primary maximum of the second frequency distribution is larger than a second frequency threshold.

13. Apparatus for determining a displacement (15) of images of an image sequence, in which a method according to one of the preceding claims is carried out, the apparatus comprising a displacement detection circuit (100), which determines the displacement (15).

## Revendications

1. Procédé pour déterminer un décalage (15) d'images dans une séquence d'images, notamment pour compenser un mouvement de caméra, selon lequel :
pour déterminer le décalage (15) on dispose de plusieurs zones d'image (6, 7, 8) de l'image,
chaque zone d'image (6, 7, 8) est prévue chaque fois à une position prédéterminée de l'image,
chaque zone d'image (6, 7, 8) a chaque fois des dimensions prévues, notamment des nombres prédéterminés de points image dans différentes directions de l'image,
**caractérisé en ce que**
on sépare le mouvement d'image de préférence provoqué par un mouvement de caméra, d'un mouvement complémentaire qui se combine au mouvement de l'image dans les zones partielles de l'image à corriger en effectuant les étapes suivantes :
- dans des positions différentes d'une image on détermine la probabilité que le mouvement d'image se produit sans mouvement complémentaire,
- pour chaque fois une zone d'image (6, 7, 8) on détermine et on fixe la position et les dimensions en fonction de la probabilité selon laquelle toujours dans une zone d'image (6, 7, 8), il se produit le mouvement d'image sans mouvement complémentaire,
- parmi les nombreuses zone d'image (6, 7, 8) on extrait de préférence au moins une première zone d'image (6, 7) pour déterminer le décalage (15).

2. Procédé selon la revendication 1,
**caractérisé en ce qu'**
on corrige une première image (14) de la séquence d'images en déterminant le décalage (15) soit à partir des données d'images de la première image (14) et des données d'images d'une seconde image (12) dans la séquence d'images, qui se trouve de préférence directement devant la première image, soit à partir de données d'images de la première image (14) et de données d'images d'une seconde image (11) de la séquence d'images de préférence directement en amont de la première image,
et comme décalage (15) on utilise un décalage par zone d'une première zone d'image (6, 7, 8),
le décalage par zone d'une zone d'image (6, 7, 8) des multiples zones d'image (6, 7, 8) se détermine soit à partir des données d'images de la première image (14) et de la seconde image (12) dans une première zone d'image (6, 7, 8), soit à partir des données d'images de la première image (14) et de la seconde image d'entrée (11) à l'intérieur d'une zone d'image (6, 7, 8).

3. Procédé selon l'une quelconque des revendications 1 ou 2,
**caractérisé en ce qu'**
on sélectionne la position et les dimensions d'au moins une première zone d'image (6, 7) pour qu'au moins une première zone d'image (6, 7) des images à corriger soit remplie principalement par le fond de l'image.

4. Procédé selon l'une quelconque des revendications précédentes,
**caractérisé en ce qu'**
on sélectionne la position et les dimensions d'au moins une seconde zone d'image (8) pour qu'au moins une seconde zone d'image (8) des images à corriger soit remplie principalement par l'avant-plan de l'image.

5. Procédé selon l'une quelconque des revendications précédentes,
**caractérisé en ce qu'**
au moins une première zone d'image (6, 7, 8) et/ou au moins une seconde zone d'image sont utilisées pour déterminer le décalage (15) en fonction d'une sécurité pour déterminer le décalage par zones.

6. Procédé selon l'une quelconque des revendications précédentes,
**caractérisé en ce que**
l'on dispose de deux premières zones d'image (6, 7) et d'une unique seconde zone d'images (8) pour la correction d'images,
la détermination du décalage (15) se faisant suivant l'un des trois modes suivants avec priorité croissante :
- à partir de la valeur moyenne du décalage par zone de la première zone d'image (6, 7) si la sécurité de la détermination du décalage par zone des deux premières zones d'image (6, 7) sont considérées comme suffisantes,
- à partir du décalage par zone de celles des deux premières zone d'image (6, 7) dont la sécurité pour déterminer le décalage par zone est considérée comme suffisante,
- à partir du décalage de zone de la seconde zone d'image (8).

7. Procédé selon la revendication 6,
**caractérisé en ce qu'**
on utilise le procédé pour un cas de prise d'images en buste (tête et épaules) et les deux premières zones d'images (6, 7) sont choisies dans une zone latérale gauche et droite de préférence symétrique par rapport à l'axe central vertical d'une image rectangulaire prédéterminée, la distance des deux premières zones d'image (6, 7) à partir du bord inférieur de l'image étant choisie plus grande que la distance des deux premières zones d'image (6, 7) par rapport au bord supérieur de l'image,
la seconde zone d'image (8) au niveau du milieu de l'image étant choisie de préférence symétrique par rapport au perpendiculaire à l'axe médian de l'image rectangulaire,
et de préférence la distance de la seconde zone d'image (8) par rapport au bord supérieur de l'image est choisie plus grande que la distance de la seconde zone d'images (8) par rapport au bord inférieur de l'image.

8. Procédé selon l'une quelconque des revendications 5 à 7,
**caractérisé en ce que**
pour deux zones d'image (6, 7) de préférence les deux premières zones d'image (6, 7), on détermine le décalage des zones et la sécurité de la détermination du décalage par plages par un procédé mettant en oeuvre les étapes suivantes :
- on forme chaque fois le décalage par zones et un quotient de corrélation pour chacune des deux zones d'image (6, 7),
- on définit une fonction à valeurs de seuil suivant le décalage par zone chaque fois déterminé pour les deux zones d'image (6, 7),
- on compare le quotient de corrélation respectif de l'une des deux zones d'image (6, 7) à la valeur qui résulte de la fonction de seuil pour le décalage par zones de l'autre des deux zones d'image (6, 7),
- on considère que la sécurité de la détermination du décalage par zones pour chaque fois l'une des deux zones d'image (6, 7) est considérée comme suffisante si le quotient de corrélation correspondant à une zone d'image (6, 7) est supérieur à celui de la valeur de la fonction de seuil qui doit lui être comparée.

9. Procédé selon la revendication 8,
**caractérisé en ce que**
la détermination du quotient de corrélation de l'une des deux zones d'image (6, 7) se définit selon un procédé comprenant les étapes suivantes :
- à l'aide d'un procédé de coïncidence de bloc on détermine les valeurs de corrélation de décalage pour plusieurs décalages de zones possibles,
- on considère le décalage de zones maximum pour les valeurs de corrélation de décalage comme le décalage par zones de la zone d'image (6, 7),
- on forme le quotient de corrélation à partir du maximum des valeurs de corrélation de décalage, divisé par la valeur moyenne des valeurs de corrélation de décalage, déterminées.

10. Procédé selon la revendication 8,
**caractérisé en ce que**
pour chaque décalage de zone quelconque, inférieur à un premier seuil prédéterminé, on prend la fonction de seuil de la valeur d'un second seuil prédéterminé, et
pour chaque décalage de zones, quelconque, supérieur à un premier seuil prédéterminé, la fonction de valeur de seuil prend la valeur du second seuil prédéterminé diminué d'un produit,
ce produit ayant comme facteurs un paramètre de pente prédéterminé et une différence, et
la différence est formée à partir du décalage de zone quelconque et du premier seuil prédéterminé.

11. Procédé selon l'une quelconque des revendications 5 à 7,
**caractérisé en ce que**
l'information de décalage de blocs d'un procédé de codage basé sur des blocs est utilisée pour déterminer le décalage par zone,
et pour chacune des zones d'image (6, 7, 8) on tient compte des informations de décalage de blocs de préférence des vecteurs de décalage des blocs qui se situent à l'intérieur de la zone d'image (6, 7, 8) respective.

12. Procédé selon la revendication 11,
**caractérisé en ce que**
pour chacune des zones d'image, pour déterminer le décalage de zones comportant une composante horizontale et une composante verticale et pour déterminer la sécurité de la détermination du décalage de zone, on exécute un procédé composé des étapes suivantes :
- pour déterminer la composante horizontale du décalage de zones on établit une première distribution des fréquences des différentes valeurs des composantes horizontales des informations de décalage de blocs,
- la composante horizontale du décalage de plages correspondant à la valeur pour laquelle la première distribution de fréquences prend son maximum principal,
- la composante horizontale correspond aux informations de décalage de blocs,
- pour déterminer la composante verticale du décalage de zones on établit une seconde distribution des fréquences de différentes valeurs des composantes verticales des informations de décalage de blocs,
- la composante verticale du décalage de zones correspondant à la valeur pour laquelle la seconde distribution de fréquence est à son maximum principal de la composante verticale des informations de décalage de blocs,
- la sécurité de la détermination du décalage de zones est considérée comme suffisante si toutes les conditions suivantes sont satisfaites:
* la valeur absolue de la différence de la position des valeurs correspondant au maximum principal et au maximum auxiliaire de la première distribution de fréquence de la composante horizontale des informations de décalage de blocs est inférieure à un premier seuil de différences prédéterminé,
* la valeur absolue de la différence de la position des valeurs qui correspondent au maximum principal et au maximum auxiliaire de la seconde distribution de fréquence de la composante verticale des informations de décalage de blocs est inférieure à un second seuil de différences prédéterminé,
- le maximum principal de la première distribution de fréquence est supérieur à un premier seuil de fréquence,
- le maximum principal de la seconde distribution de fréquence est supérieur à un second seuil de fréquence.

13. Dispositif pour déterminer un décalage (15) d'images d'une séquence d'images mettant en oeuvre le procédé selon l'une quelconque des revendications précédentes dans lequel le dispositif comporte un circuit de détection de décalage (100) qui définit le décalage (15).
